# EUROPEAN PATENT SPECIFICATION

(11) **EP 2 835 109 B1**
(45) Date of publication and mention of the grant of the patent: **14.11.2018**
(21) Application number: 14002617.0
(22) Date of filing: 28.07.2014
(51) Int. Cl.: B05B 15/65, B05C 17/005, A61C 5/68, A61C 9/00

(54) **Nozzle tip**
Düsenspitze
Bec de buse

(30) Priority: 09.08.2013 JP 2013166312
(43) Date of publication of application: 11.02.2015
(73) Proprietor: GC Corporation, Bunkyo-ku Tokyo 113-0033 (JP)
(72) Inventor: Suzuki, Takumi, Tokyo (JP); Miyano, Tatsunosuke, Tokyo (JP)
(74) Representative: Müller-Boré & Partner Patentanwälte PartG mbB

(56) References cited:
- EP-A1- 1 741 405
- EP-A2- 1 825 927
- DE-U1-202006 007 492
- US-A- 4 993 948

## Description

The present invention relates to a set of a mixing tip and a nozzle tip capable of being locked securely and unremovably after being fixed temporarily at a tip-end of the mixing tip.

A mixing tip has been widely used at a time of mixing and kneading a pasty dental material. For example, in Japanese Patent Application Laid-Open No. H8-207942, a mixing tip is detachably attached to a container, in which the dental material is stored, for example, at a mouthpiece on a tip-end of the container through a locking claw.

To such a mixing tip, there is a case that a nozzle tip is attached to use depending on the application, for example, the case of directly discharging more the dental material in an oral cavity.

Since the nozzle tip is thinner and smaller than the mixing tip, large pressure is applied in the nozzle tip at a time of discharging, so that the nozzle tip is easy to come off. Therefore, for preventing problems, for example, the nozzle tip falls down in an oral cavity of a patient at a time of operation, it is important for the nozzle tip to be unremovably locked to the mixing-tip.

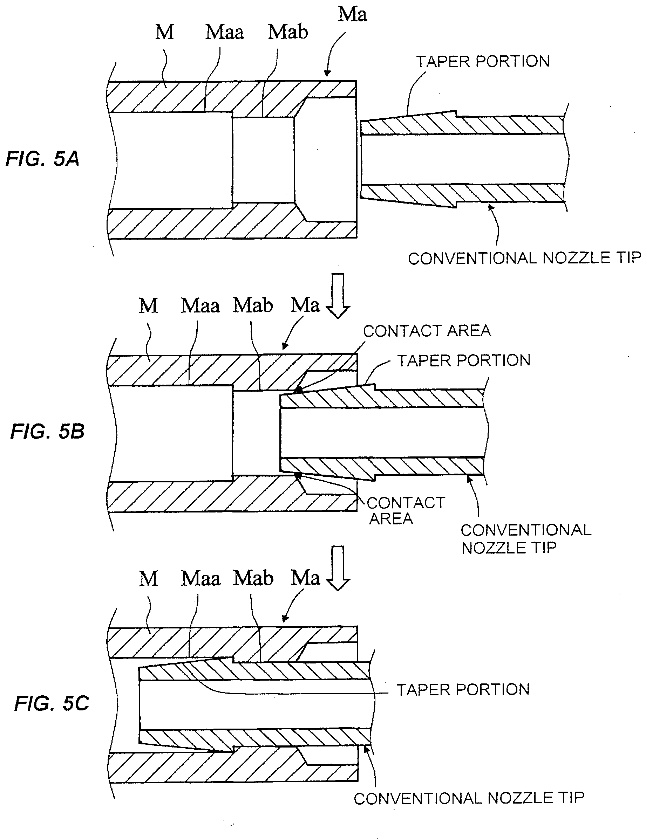

As such a mixing tip in which the nozzle tip is locked, there is a mixing tip having a discharging port provided with a cylindrical portion and a protrusion portion on the tip-end side of the cylindrical portion. Fig. 5 is a cross-sectional explanation view illustrating a state of inserting a conventional nozzle tip into the mixing tip. When such a mixing tip is used, as illustrated in Fig. 5A, a contact area between the protrusion portion of the discharging port of the mixing tip and a taper portion of the nozzle tip becomes small so that insertion load can be reduced, as illustrated in Fig. 5B. Further, when the nozzle tip is completely inserted, the nozzle tip can be unremovably locked between a step portion continuously provided to the taper portion and an end portion on the rear side of the protrusion portion of the mixing tip, as illustrated in Fig. 5C.

For firmly locking the nozzle tip to the mixing tip, it is necessary to insert and lock with very large force. Therefore, there may be cases that a user needs to re-grip the nozzle tip or makes his hand slipped by excessive force.

At that time, if the user releases his hand from the nozzle tip for re-gripping or slips his hand, the nozzle tip is pushed back from the discharging port of the mixing tip and often falls down, since the state of the protrusion portion of the mixing tip and the taper portion of the nozzle tip is in Fig. 5B. As the result, the nozzle cannot be re-used hygienically, so that there has been problems that the user wastes the nozzle tip, requires wasteful time and effort for the preparation of an operation, or the like.

DE 20 2006 007492 U1 discloses a connecting arrangement for applicators, particularly for applicators which are used for applying liquid or pasty media, comprising a connecting part and a sleeve-shaped holding portion.

EP 1 741 405 A1 discloses a delivery system for dental materials comprising a capsule having capsule body member and a cannula for dispensing material from said capsule body member, and an extension element, wherein the cannula and the extension element are adapted for a user-activatable unreleasable engagement with each other.

In view of the above problems, the present invention is directed to providing a set of a mixing tip and a nozzle tip being hardly removed from the mixing tip, when a user releases or slips his hand at a time of inserting the nozzle tip, while reducing the load of inserting the nozzle tip into the discharging port of the mixing tip.

The present inventors earnestly work for solving the above problems and reach the following conclusion. That is, a set of a mixing tip and a nozzle tip as defined in claim 1.

Having such a constitution, when the nozzle tip is inserted into the discharging port of the mixing tip, the cylindrical portion for temporary fixing of the nozzle tip is inserted in the protrusion portion of the mixing tip to have a state of temporary fixing, at first. Thus, a user can easily re-grip after leaving his hand. If the nozzle tip is inserted deeper, the taper portion of the nozzle tip is inserted into the protrusion portion of the mixing tip. At this time, since the contacting area between the taper portion of the nozzle tip and the protrusion portion of the mixing tip is small, the insertion load is small. Thus, the user can easily insert the nozzle tip. Further, even when the user slips his hand, only the taper portion is pushed back from the protrusion portion and the cylindrical portion for temporary fixing of the nozzle tip stays in the protrusion portion of the mixing tip, so that it can be hardly that the nozzle tip falls down. Furthermore, if the cylindrical portion for engaging is inserted into the protrusion portion of the mixing tip following to the taper portion, the step portion of the taper portion of the nozzle tip is locked with an end portion on the rear side of the protrusion portion of the mixing tip, so that the nozzle tip is tightly and unremovably locked to the discharging port of the mixing tip.

Further, it is preferable that a notch portion is formed on an outer periphery of the cylindrical portion for engaging side of the taper portion.The notch portion is cut out toward an axial direction of the taper portion at even intervals. Having such a constitution, the insertion load, which generates between the taper
portion of the nozzle tip and the protrusion portion of the mixing tip at a time of inserting the nozzle tip into the discharging port of the mixing tip, is reduced more, so that a user can easily insert the nozzle tip.

The nozzle tip according to the present invention is to be inserted and locked into the discharging port of the mixing tip, which is for mixing and discharging a pasty dental material. The discharging port is provided with a cylindrical portion and a protrusion portion on the tip-end side of the cylindrical portion of the mixing tip.
The nozzle tip comprises an insertion portion which is to be inserted into the discharging port of the mixing tip. The insertion portion consists of the cylindrical portion for temporary fixing, the taper portion, and the cylindrical portion for engaging. The cylindrical portion for temporary fixing has an outer diameter which is equal to the inner diameter of the protrusion portion of the mixing tip. The taper portion is continuously provided on the cylindrical portion for temporary fixing. The outer diameter of the taper portion increases toward the tip-end side of the nozzle tip up to an outer diameter which is smaller than the inner diameter of the cylindrical portion of the mixing tip and decreases to an outer diameter which is larger than the inner diameter of the protrusion portion of the mixing tip at a step portion. The cylindrical portion for engaging is continuously provided on the step portion of the taper portion and has the outer diameter which is equal to the outer diameter of the taper portion at the step portion and the length which is longer than a length of the protrusion portion of the mixing tip. Having such a constitution, when the nozzle tip is inserted into the discharging port of the mixing tip, the cylindrical portion for temporary fixing of the nozzle tip is inserted in the protrusion portion of the mixing tip to have a state of temporary fixing, at first. Thus, a user can easily carry out operations, such as re-gripping after leaving his hand. If the nozzle tip is inserted deeper, the taper portion of the nozzle tip is inserted in the protrusion portion of the mixing tip. At this time, since the contacting area between the taper portion of the nozzle tip and the protrusion portion of the mixing tip is small, the insertion load is small. Thus, the user can easily insert the nozzle tip. Further, even when the user slips his hand, only the taper portion is pushed back from the protrusion portion and the cylindrical portion for temporary fixing of the nozzle tip stays in the protrusion portion of the mixing tip, so that it can be hardly that the nozzle tip falls down. Furthermore, if the cylindrical portion for engaging is inserted in the protrusion portion of the mixing tip following to the taper portion, the step portion of the taper portion of the nozzle tip is locked with end portion on the rear side of the protrusion portion of the mixing tip, so that the nozzle tip is tightly and unremovably locked to the discharging port of the mixing tip.

Further, in the embodiment a notch portion is formed on an outer periphery of the cylindrical portion for engaging side of the taper portion. The notch portion is cut out toward an axial direction of the taper portion at even intervals. It is preferable that the insertion load, which generates between the taper portion of the nozzle tip and the discharging port of the mixing tip at a time of insertion of the nozzle tip into the protrusion portion of the mixing tip, is reduced more, so that the user can easily insert the nozzle tip.

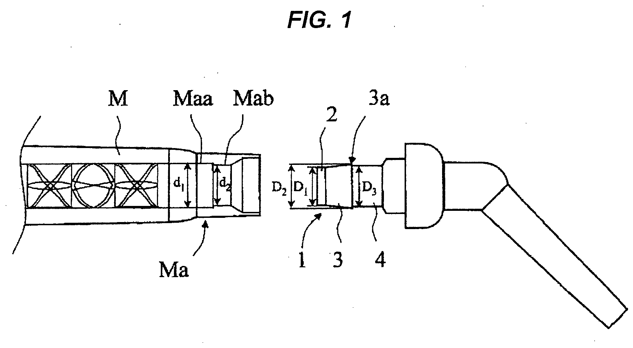

Fig. 1 is a front view illustrating a mixing tip and an exemplary embodiment of the nozzle tip according to the present invention.

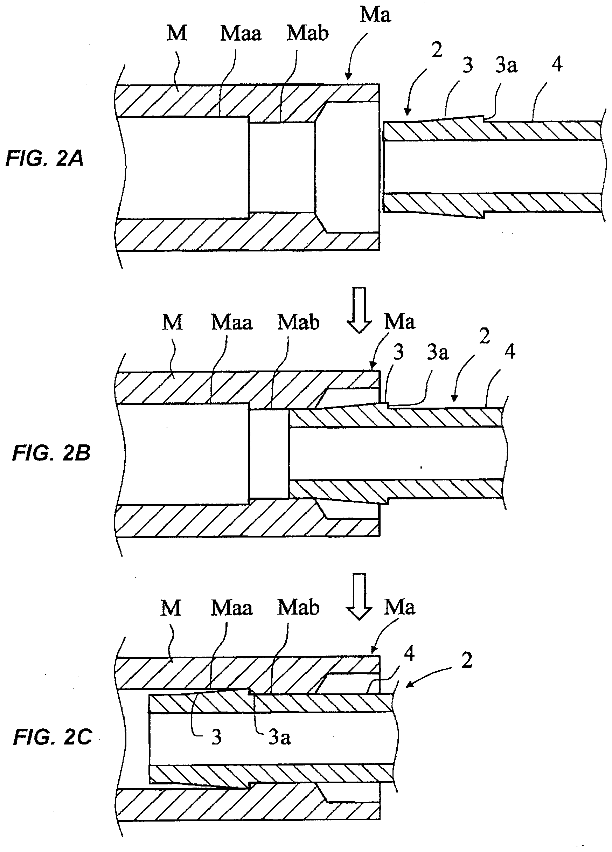

Fig. 2 is a cross-sectional explanation view illustrating an insertion state of the nozzle tip according to Fig. 1 in the mixing tip.
Fig. 3 is a front view illustrating another exemplary embodiment according to the present invention.
Fig. 4 is an enlarged left side view of A part illustrated in Fig. 3.
Fig. 5 is a cross-sectional explanation view illustrating an insertion state of the conventional nozzle tip in the mixing tip.

The nozzle tip according to the present invention will be described, referring to drawings as follows.

A mixing tip M is for mixing, kneading, and discharging a pasty dental material. In the mixing tip M, a discharging port Ma is provided with a cylindrical portion Maa having an inner diameter d₁ and a protrusion portion Mab having an inner diameter d₂ on the tip-end side of the cylindrical portion Maa of the mixing tip M. The nozzle tip according to the present invention is inserted and locked into such the discharging port Ma of the mixing tip M. The nozzle tip comprises an insertion portion 1 which is to be inserted into the discharging port Ma of the mixing tip M.

The insertion portion 1 consists of a cylindrical portion for temporary fixing 2, a taper portion 3, and a cylindrical portion for engaging 4, which are described later. In addition, although the nozzle tip according to the present invention includes the insertion portion 1 and a nozzle portion, the nozzle portion is not particularly limited including a shape, or the like. The cylindrical portion for temporary fixing 2 has an outer diameter D₁ which is equal to the inner diameter d₂ of the protrusion portion Mab of the mixing tip M.

The cylindrical portion for temporary fixing 2 needs to be securely held when being inserted into the discharging port Ma of the mixing tip M. Therefore, the outer diameter D₁ of the cylindrical portion for temporary fixing 2 needs to be the same as the inner diameter d₂ of the protrusion portion Mab of the mixing tip M.

The taper portion 3 is continuously provided on the cylindrical portion for temporary fixing 2. The outer diameter of the taper portion 3 increases toward the tip-end side of the nozzle tip up to an maximum outrer diameter D₂ which is smaller than the inner diameter d₁ of the cylindrical portion Maa of the mixing tip M and decreases to an outer diameter D₃ which is larger than the inner diameter d₂ of the protrusion portion Mab of the mixing tip M at a step portion 3a. The cylindrical portion for engaging 4 is continuously provided on the step portion 3a of the taper portion 3, and has an outer diameter which is equal to the outer diameter D₃ and a length which is longer than a length of the protrusion portion Mab of the mixing tip M.

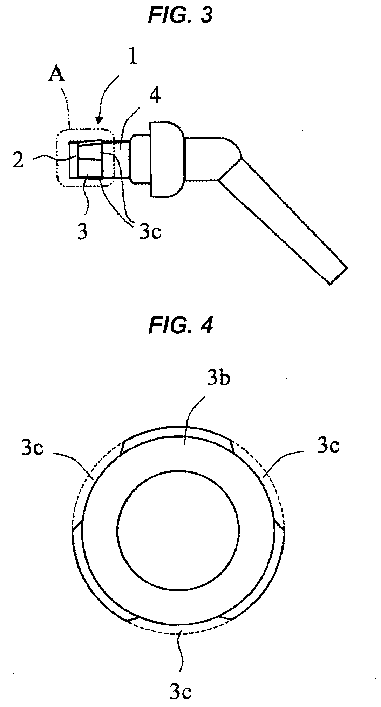

If a notch portion 3c which is cut out toward an axial direction of the taper portion 3 at even intervals is formed on an outer periphery 3b of the cylindrical portion for engaging 4 side of the taper portion 3, the insertion load is reduced more, so that a user can easily insert the nozzle tip. The insertion load generates between the taper portion 3c of the nozzle tip and the protrusion portion Mab of the mixing tip M at a time of inserting the nozzle tip into the discharging port of the mixing tip M. So, it is preferable. In addition, in embodiments illustrated in Fig. 3 and Fig. 4, notch portions 3c, which are cut out toward an axial direction of the taper portion 3 at even intervals, are formed not only on the outer periphery 3b of the cylindrical portion for engaging 4 side of the taper portion 3 but also on the entirety in the axial direction of the taper portion 3.

When a user uses such the nozzle tip according to the present invention, at first, the user attaches the nozzle tip to the discharging port Ma of the mixing tip M. At this time, the user can attach the nozzle tip to either the mixing tip M mounted to a container storing a dental material, or directly to the single body of the mixing tip M.

Further, it is necessary to push in the nozzle tip with strong force after inserting the insertion portion 1 of the nozzle tip into the discharging port Ma of the small mixing tip M. Thus, the user needs to push the insertion portion 1 of the nozzle tip into the discharging port Ma of the mixing tip M after re-gripping, or to press against a hard substance or strike with a hard substance. In such an operation, the user can unremovably lock the nozzle tip to the mixing tip.

In such a time, in the conventional nozzle tip, when the user releases his hand for re-gripping or pressing against the hard substance, the force is applied to the taper portion of the nozzle tip being in contact with the protrusion portion Mab of the mixing tip M. As the result of this, the nozzle tip is pushed back until removing from the mixing tip M, even if the nozzle tip is inserted a little in the discharging port Ma of the mixing tip M. On the other hand, in the nozzle tip according to the present invention, the nozzle tip can be temporary fixed to the protrusion portion Mab of the mixing tip M with the cylindrical portion for temporary fixing 2 on the tip-end side of the nozzle tip. The cylindrical portion for temporary fixing 2 has the outer diameter D₁ which is equal to the inner diameter d₂ of the protrusion portion Mab of the mixing tip M. Thus, when the user release his hand in the state in which the nozzle tip is inserted a little in the discharging port Ma of the mixing tip M, the user can easily attach the nozzle tip to the mixing tip M by re-gripping or pushing against the hard substance. Further, when the user fails by slipping his hand at a time of insertion of the insertion portion 1 of the nozzle tip to the discharging port Ma of the mixing tip M, the force is applied to the taper portion 3, so that the nozzle tip is pushed back. However, the force is disappeared when the cylindrical portion for temporary fixing 2 comes only in the protrusion portion Mab of the mixing tip M. Thus, the nozzle tip according to the present invention is hardly removed down since the nozzle tip is not pushed back to the end part of the mixing tip M.

Further, at least on the outer periphery 3b of the cylindrical portion for engaging 4 side of the taper portion 3, if the notch portion 3c is formed toward the axial direction of the taper portion 3 at even intervals, the insertion load can be reduced. In addition to this, when the user releases his hand from the nozzle tip or slips his hand, the pushing back force to the taper portion 3 becomes weak, so that the nozzle tip can be hardly removed from the discharging port Ma of the mixing tip M. Thus, it is preferable.

By this way, after using the dental materials in the mixing tip M, in which the nozzle tip is attached, by mixing, kneading, and discharging, the whole mixing tip or the whole container storing the dental materials can be discarded, because the nozzle tip according to the present invention is unremovably locked to the mixing tip M. Thus, the handling after use can be carried out very easily.

## Claims

1. A set of a mixing tip (M) and a nozzle tip, the mixing tip (M) being used to mix and discharge a pasty dental material and the nozzle tip being to be inserted and locked into a discharging port (Ma) provided on a tip-end side of the mixing tip (M),
wherein the discharging port (Ma) is provided with a cylindrical portion (Maa) having an inner diameter (d₁) and a protrusion portion (Mab) having an inner diameter (d₂) on a tip-end side of the cylindrical portion (Maa),
wherein the nozzle tip comprises an insertion portion (1) which is to be inserted into the discharging port (Ma) of the mixing tip (M),
wherein the insertion portion (1) consists of a cylindrical portion for temporary fixing (2), a taper portion (3), and a cylindrical portion for engaging (4),
wherein the cylindrical portion for temporary fixing (2) has a first outer diameter (D₁) which is equal to the inner diameter (d₂) of the protrusion portion (Mab) of the mixing tip (M),
wherein the taper portion (3) is continuously provided on the cylindrical portion for temporary fixing (2), and an outer diameter thereof increasing toward the tip-end side of the nozzle tip up to a second outer diameter (D₂) and decreasing to a third outer diameter (D₃) at a step portion (3a),
wherein the second outer diameter (D₂) is smaller than the inner diameter (d₁) of the cylindrical portion (Maa) of the mixing tip (M), and
wherein the cylindrical portion for engaging (4) is continuously provided on the step portion (3a) of the taper portion (3), and has an outer diameter which is equal to the third outer diameter (D₃) and a length which is longer than a length of the protrusion portion (Mab) of the mixing tip (M),
**characterized in that**
the third outer diameter (D₃) is larger than the inner diameter (d₂) of the protrusion portion (Mab) of the mixing tip (M).

2. The set according to claim 1,
wherein a notch portion (3c) is formed on an outer periphery (3b) of the cylindrical portion for engaging (4) side of the taper portion (3), and
wherein the notch portion (3c) is cut out toward an axial direction of the taper portion (3) at even intervals.

## Patentansprüche

1. Satz aus einer Mischspitze (M) und einer Düsenspitze, wobei die Mischspitze (M) verwendet wird, um ein pastöses zahnmedizinisches Material zu mischen und abzugeben, und wobei die Düsenspitze in eine Abgabeöffnung (Ma), die auf einer Spitzenendseite der Mischspitze (M) bereitgestellt ist, eingesetzt und in dieser arretiert werden soll,
wobei die Abgabeöffnung (Ma) mit einem zylindrischen Abschnitt (Maa) mit einem Innendurchmesser (d₁) und einem Vorsprungabschnitt (Mab) mit einem Innendurchmesser (d₂) auf einer Spitzenendseite des zylindrischen Abschnitts (Maa) versehen ist,
wobei die Düsenspitze einen Einsetzabschnitt (1) umfasst, der in die Abgabeöffnung (Ma) der Mischspitze (M) eingesetzt werden soll,
wobei der Einsetzabschnitt (1) aus einem zylindrischen Abschnitt für die vorübergehende Fixierung (2), einem angeschrägten Abschnitt (3) und einem zylindrischen Abschnitt zum Eingreifen (4) besteht,
wobei der zylindrische Abschnitt für die vorübergehende Fixierung (2) einen ersten Außendurchmesser (D₁) hat, der gleich dem Innendurchmesser (d₂) des Vorsprungabschnitts (Mab) der Mischspitze (M) ist,
wobei der angeschrägte Abschnitt (3) kontinuierlich auf dem zylindrischen Abschnitt zur vorübergehenden Fixierung (2) bereitgestellt ist und sein Außendurchmesser in Richtung der Spitzenendseite der Düsenspitze bis zu einem zweiten Außendurchmesser (d₂) zunimmt und an einem Stufenabschnitt (3a) zu einem dritten Außendurchmesser (d₃) abnimmt,
wobei der zweite Außendurchmesser (D₂) kleiner als der Innendurchmesser (d₁) des zylindrischen Abschnitts (Maa) der Mischspitze (M) ist, und
wobei der zylindrische Abschnitt zum Eingreifen (4) kontinuierlich auf dem Stufenabschnitt (3a) des angeschrägten Abschnitte (3) bereitgestellt ist und einen Außendurchmesser, der gleich dem dritten Außendurchmesser (D₃) ist, und eine Länge, die länger als eine Länge des Vorsprungabschnitts (Mab) der Mischspitze (M) ist, hat,
**dadurch gekennzeichnet, dass**
der dritte Außendurchmesser (D₃) größer als der Innendurchmesser (d₂) des Vorsprungabschnitts (Mab) der Mischspitze (M) ist.

2. Satz nach Anspruch 1,
wobei ein Kerbabschnitt (3c) auf einem Außenumfang (3b) der Seite des zylindrischen Abschnitts zum Eingreifen (4) des angeschrägten Abschnitts (3) ausgebildet ist, und
wobei der Kerbabschnitt (3c) in Richtung einer Axialrichtung des angeschrägten Abschnitts (3) in gleichmäßigen Abständen ausgeschnitten ist.

## Revendications

1. Ensemble pointe de mélange (M) et bec de buse, la pointe de mélange (M) étant utilisée pour mélanger et évacuer un matériau dentaire en pâte et le bec de buse étant destiné à être inséré et verrouillé dans un orifice d'évacuation (Ma) prévu sur un côté d'extrémité de pointe de la pointe de mélange (M),
dans lequel l'orifice d'évacuation (Ma) est doté d'une portion cylindrique (Maa) ayant un diamètre intérieur (d₁) et une portion saillante (Mab) ayant un diamètre intérieur (d₂) sur un côté d'extrémité de pointe de la portion cylindrique (Maa),
dans lequel le bec de buse comporte une portion d'insertion (1) qui doit être insérée dans l'orifice d'évacuation (Ma) de la pointe de mélange (M),
dans lequel la portion d'insertion (1) est composée d'une portion cylindrique pour fixation temporaire (2), d'une portion d'effilement (3) et d'une portion cylindrique pour solidarisation (4),
dans lequel la portion cylindrique pour fixation temporaire (2) a un premier diamètre extérieur (D₁) qui est égal au diamètre intérieur (d₂) de la portion saillante (Mab) de la pointe de mélange (M),
dans lequel la portion d'effilement (3) est prévue en continu sur la portion cylindrique pour fixation temporaire (2) et un diamètre extérieur de celle-ci augmentant vers le côté d'extrémité de pointe du bec de buse jusqu'à un deuxième diamètre extérieur (D₂) et diminuant jusqu'à un troisième diamètre extérieur (D₃) au niveau d'une portion étagée (3a),
dans lequel le deuxième diamètre extérieur (D₂) est plus petit que le diamètre intérieur (d₁) de la portion cylindrique (Maa) de la pointe de mélange (M) et
dans lequel la portion cylindrique pour solidarisation (4) est prévue en continu sur la portion étagée (3a) de la portion d'effilement (3) et a un diamètre extérieur qui est égal au troisième diamètre extérieur (D₃) et une longueur qui est plus longue qu'une longueur de la portion saillante (Mab) de la pointe de mélange (M),
**caractérisé en ce que**
le troisième diamètre extérieur (D₃) est plus grand que le diamètre intérieur (d₂) de la portion saillante (Mab) de la pointe de mélange (M).

2. Ensemble selon la revendication 1,
dans lequel une portion d'encoche (3c) est constituée sur une périphérie extérieure (3b) de la portion cylindrique pour solidarisation (4) du côté de la portion d'effilement (3) et
dans lequel la portion d'encoche (3c) est découpée vers une direction axiale de la portion d'effilement (3) à intervalles réguliers.
